# EUROPEAN PATENT SPECIFICATION

(11) **EP 2 348 650 B1**
(45) Date of publication and mention of the grant of the patent: **06.03.2019**
(21) Application number: 09799962.7
(22) Date of filing: 03.07.2009
(51) Int. Cl.: H04B 10/40

(54) **METHOD AND APPARATUS FOR IMPLEMENTING AN OPTICAL INTERFACE WITH A PLURALITY OF VELOCITIES**
VERFAHREN UND VORRICHTUNG ZUR IMPLEMENTIERUNG EINER OPTISCHEN SCHNITTSTELLE MIT MEHREREN GESCHWINDIGKEITEN
PROCÉDÉ ET APPAREIL DESTINÉS À METTRE EN APPLICATION UNE INTERFACE OPTIQUE AVEC UNE PLURALITÉ DE VITESSES

(30) Priority: 24.07.2008 CN 200810133768
(43) Date of publication of application: 27.07.2011
(73) Proprietor: ZTE Corporation, Shenzhen, Guangdong 518057 (CN)
(72) Inventor: LIU, Feng, Guangdong 518057 (CN)
(74) Representative: Novagraaf Technologies
(86) International application number: PCT/CN2009/072614
(87) International publication number: WO 2010/009647

(56) References cited:
- EP-A2- 1 156 604
- EP-A2- 1 206 092
- WO-A1-02/069526
- CN-A- 1 567 913
- CN-A- 1 781 288
- CN-A- 101 079 676
- CN-A- 101 330 328
- US-A1- 2003 058 894

## Description

### Field of the Invention

The present invention relates to communication field, and specifically, to a method and an apparatus for implementing an optical interface with a plurality of velocities.

### Background of the Invention

In order to adapt to the development of fiber technology, unify the products of various communication manufacturers, and implement the intercommunication of transmission information, the international telecommunication union has made a communication standard of the Synchronous Digital Hierarchy (referred to as SDH). The frame information structure of the Synchronous Digital Hierarchy has rich overhead bytes, which facilitates the transmission of information and the management of network, wherein, unified interface parameters enable networking of devices of different manufacturers, and the regional communication network intercommunication, even the global communication network intercommunication. These advantages enable the transmission network based on the Synchronous Digital Hierarchy to become the main direction of the establishment of optical communication network.

Since the clients have different demands for service bandwidth, devices need to provide interfaces with different speeds to satisfy the requirements of different clients. In the SDH system standard, four speed levels are defined: STM-1(155M), STM-4 (622M), STM-16 (2.5G), and STM-64 (10G), wherein a complete quadruple relation exists between the four speed levels, viz. the speed of STM-64 equals to that of multiplying the speed of STM-16 by four, and by analogy, the speed of STM-4 equals to that of multiplying the speed of STM-1 by four. Thus, complete synchronous relation exists between different speed levels in the system, four STM-1 service data streams can become one STM-4 service signal by using the manner of synchronous multiplexing, and four STM-16 service data streams can become one STM-64 service signal by using the manner of synchronous multiplexing.

Since the standard of synchronous multiplexing is used, the device uses the same processing mode for client services with different velocities, except that the processing of clock I frequency corresponding to data capacity is different. It is the above advantages brought forth by synchronous multiplexing technology that promote the popularization and application of the SDH standard.

Since the SDH standard has four speed levels, and can provide interfaces with four speeds for users, relevant devices usually provide four kinds of single boards, each of which provides different speed levels, and has multiple optical interfaces. For clients with less business volume, they need less optical interfaces, but need multiple kinds of velocities. Thus, device manufacturers need a kind of single board capable of providing multiple optical interfaces with each optical interface having different speed.

However, due to the difference of clients' requirements, there are still many kinds of such single boards, wherein some of the single boards have more low-speed optical interfaces, and some of the single boards have more high-speed optical interfaces. Meanwhile, some clients require that a single board is provided with interfaces with various velocities, but the number of interfaces of each kind of velocity is uncertain. In this case, when meeting these demands, the device manufacturers need to provide quite many kinds of single boards, which results in high costs of research and development, production, and maintenance. In relevant technologies, no technical solution has been proposed to solve the above problem.

The related document (US 2003/058894 A1) discloses method and apparatus for autosensing LAN vs WAN to determine port type; and the related document (EP 1206092 A2) discloses automatic bit-rate detection scheme for a sonet transceiver.

### Summary of the Invention

The present invention is proposed in view of the problem that the costs of research and development, production and maintenance rise rapidly for relevant device manufacturers because of the great diversity of single boards provided. Thus, the present invention mainly aims to providing a method and an apparatus for implementing an optical interface with a plurality of velocities, in order to solve at least one of the problems.

In order to achieve the above object, according to one aspect of the present invention, a method for implementing an optical interface with a plurality of velocities is provided.

The method for implementing an optical interface with a plurality of velocities according to the present invention comprising at the receiving side of the optical interface: recovering clock and data of an input data stream, wherein the recovering data is embodied as recovering serial data into parallel data; and carrying out velocity detection and data detection on the recovered data stream, and adjusting the system into a normal operation state according to the results of the velocity detection and the data detection, and comprising at the transmitting side of the optical interface: configuring transmission velocity according to the velocity of the system in the normal operation state; and recovering the transmitted data from parallel data to serial data, and transmitting the recovered serial data.

The step of the carrying out velocity detection on the recovered data stream is embodied as: detecting whether consecutive identical contents appear in the recovered data stream in predetermined time period; and in the case that it is detected that consecutive identical contents appear in the data stream in predetermined time period, transmitting a warning of excessive operational velocity.

Preferably, before carrying out velocity detection and data detection on the recovered data stream, the method further comprises: setting an operational velocity as the highest operational velocity.

Preferably, the step of the carrying out data detection on the recovered data stream is embodied as: detecting whether contents of the recovered data stream are normal in predetermined time period; and in the case that it is detected that contents of the recovered data stream are abnormal, configuring the operational velocity of the receiving side of the optical interface with the highest operational velocity, and restarting velocity configuration, velocity detection and data detection.

Preferably, after configuring transmission velocity, the method further comprises: adjusting the transmitted data, which particularly comprises: adjusting effective data contents on an input data bus to the corresponding position of a transmission data bus according to the operational velocity configured at the receiving side of the optical interface, and converting parallel data into serial data.

In order to achieve the above object, according to another aspect of the present invention, an apparatus for implementing an optical interface with a plurality of velocities is provided, the apparatus comprising modules at the receiving side of the optical interface and modules at the transmitting side of the optical interface.

The apparatus for implementing an optical interface with a plurality of velocities according to the present invention comprising at the receiving side of the optical interface: a receiving module, adapted to receive an input data stream, and recover clock and data of the input data stream, wherein, recovering data is embodied as recovering serial data into parallel data; a velocity detection module, adapted to carry out velocity detection on the recovered data stream, so as to detect whether the operational velocity is suitable; a data detection module, adapted to carry out data detection on the recovered data stream, so as to detect whether data frames are correct; and a state controlling module, adapted to configure the operational velocities of the receiving module and a transmitting module according to the results of the velocity detection and the data detection, and adjust the system into a normal operation state, and comprising at the transmitting side of the optical interface: the transmitting module, adapted to recover transmitted data from parallel data to serial data, and transmit the recovered serial data.

Preferably, the apparatus further comprises: a data adjusting module, adapted to adjust transmitted data, wherein the state controlling module is further adapted to configure an adjusting method of the data adjusting module according to the operational velocity configured.

The velocity detection module is further adapted to detect whether consecutive identical contents appear in the recovered data stream in predetermined time period; and in the case that it is detected that consecutive identical contents appear in the data stream in predetermined time period, it transmits a warning of excessive operational velocity; and the state controlling module is further adapted to reduce the operational velocity in response to the warning of excessive operational velocity, and continuously monitor the operational velocity, wherein in the case that consecutive identical contents still appear in a next predetermined time period, it continues reducing the operational velocity until no consecutive identical contents appear.

Preferably, the data detection module is further adapted to detect whether contents of the recovered data stream are normal in predetermined time period; and the state controlling module is further adapted to, in the case that it is detected that contents of the recovered data stream are abnormal, configure the operational velocity of the receiving side of the optical interface with the highest operational velocity, and restart velocity configuration, velocity detection and data detection.

By means of the technical solutions of the present invention, through an optical interface which automatically adapts to a plurality of velocities, the kinds of single boards of devices can be reduced, which has obvious economic benefit.

Other characteristics and advantages of the present invention will be explained in the following description, and moreover, parts of them become obvious from the description, or understood by carrying out the present invention. The object and other advantages of the present invention can be realized and obtained through the structure particularly mentioned in the description, the claims, and the accompanying drawings.

### Brief Description of the Accompanying Drawings

The drawings herein are used to provide further understanding of the present invention and form a part of the specification, which are used to explain the present invention with embodiments of the present invention rather than unduly limit the present invention. In the accompanying drawings:
Figure 1 is a block diagram of the apparatus for implementing an optical interface with a plurality of velocities according to an embodiment of the present invention;
Figure 2 is a flow chart of the method for implementing an optical interface with a plurality of velocities according to an embodiment of the present invention;
Figure 3 is an operation schematic diagram of the speed detection module according to an embodiment of the present invention; and
Figure 4 is a flow chart of specific processing of the state controlling module according to an embodiment of the present invention.

### Detailed Description of the Preferred Embodiments

### Brief Description on Functions

In the technical solutions provided in the embodiments of the present invention, at the receiving side of the optical interface, after clock and data of an input data stream are recovered, velocity detection and data detection are carried out on the recovered data, and the system is adjusted into a normal operation state according to the results of the velocity detection and the data detection; at the transmitting side of the optical interface, transmission velocity is configured according to the velocity of the system in the normal operation state, and the transmitted data is recovered from parallel data to serial data, and the serial data is transmitted. The solutions solves the problem that the costs of research and development, production and maintenance rise rapidly for relevant device manufacturers because of the great diversity of single boards provided, and can reduce the kinds of single boards of devices through an optical interface which automatically adapts to a plurality of velocities, which has significant economic benefit.

The preferable embodiments of the present invention are described in conjunction with the drawings herein as follows. It shall be understood that the preferable embodiments herein are just used to describe and explain the present invention and shall not be construed as limitations on the present invention. It shall be explained that the embodiments in the present application and the features in the embodiments can be combined with each other if there is no conflict.

At present, with the development of the Field Programmable Gate Array (referred to as FPGA) chip technology, high-end FPGA chips all provide Serializer Deserializer (referred to as serdes) module. The serdes module can configure operational velocity on line, and allow the reception/transmission of service signals at different speeds. Thus, the characteristics of the serdes module in the FPGA chip enable the designed optical interface to automatically adapt to a plurality of velocities. In the present invention, a method and an apparatus for implementing an optical interface which can automatically adapt to a plurality of velocities using serdes resources are provided. The solution can automatically adapt to the velocity required by the client's service, and automatically provide different velocities, and thereby, can reduce the kinds of single boards of devices.

The apparatus for implementing an optical interface with a plurality of velocities according to an embodiment of the present invention will be described in detail as follows in conjunction with the drawings.

### Apparatus Embodiments

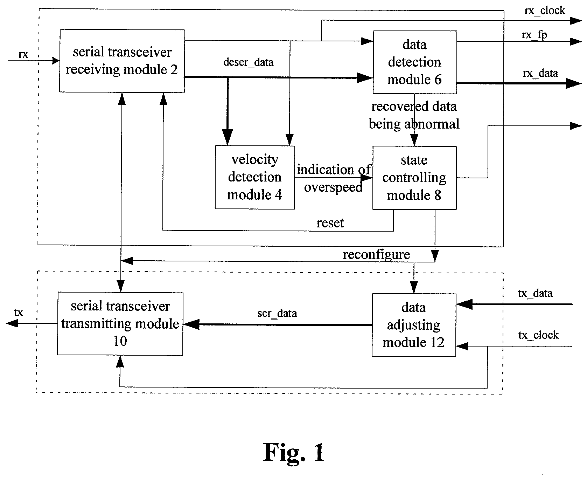

According to an embodiment of the present invention, an apparatus for implementing an optical interface with a plurality of velocities is provided, the apparatus comprising modules at the receiving side of the optical interface and modules at the transmitting side of the optical interface. Figure 1 is a block diagram of the apparatus for implementing an optical interface with a plurality of velocities according to an embodiment of the present invention. As shown in Figure 1, at the receiving side of the optical interface, the apparatus comprises: a receiving module 2, a velocity detection module 4, a data detection module 6, and a state controlling module 8; and at the transmitting side of the optical interface, the apparatus comprises a transmitting module 10. The modules are described in detail as follows.

### (1) Receiving Side of Optical Interface

The receiving module 2 is adapted to receive an input data stream, recover clock and data of the input data stream, wherein recovering data is specifically embodied as recovering serial data into parallel data.

The velocity detection module 4 is adapted to carry out velocity detection on the recovered data stream so as to detect whether the operational velocity is suitable.

The data detection module 6 is adapted to carry out data detection on the recovered data stream so as to detect whether data frames are correct.

The state controlling module 8 is adapted to configure the operational velocities of the receiving module and the transmitting module according to the results of the velocity detection and the data detection, and adjust the system into a normal operation state.

In addition, the velocity detection module 4 is further adapted to detect whether consecutive identical contents appear in the recovered data stream in predetermined time period, wherein when it is detected that consecutive identical contents appear in the data stream in predetermined time period, it transmits a warning of excessive operational velocity. The state controlling module 8 is further adapted to reduce the operational velocity in response to the warning of excessive operational velocity, and continuously monitor the operational velocity, wherein when consecutive identical contents still appear in a next predetermined time period, it continuously reduces the operational velocity until no consecutive identical content appears.

Furthermore, the data detection module 6 is further adapted to detect whether contents of the recovered data stream are normal in predetermined time period; and the state controlling module 8 is further adapted to, in the case that the data detection module 6 detects that contents of the recovered data stream are abnormal, configure the operational velocity of the receiving side of the optical interface with the highest operational velocity, and restart the velocity configuration, velocity detection and data detection.

### (2) Transmitting Side of Optical Interface

The transmitting module 10 is adapted to recover the transmitted data from parallel data to serial data, and transmit the recovered serial data.

In addition, at the transmitting side of the optical interface, the apparatus further comprises:
a data adjusting module 12, adapted to adjust the transmitted data; wherein the state controlling module 8 is further adapted to configure an adjusting method of the data adjusting module according to the operational velocity configured.

### Method Embodiments

According to an embodiment of the present invention, a method for implementing an optical interface with a plurality of velocities is provided. The method for implementing an optical interface with a plurality of velocities according to an embodiment of the present invention will be described in detail as follows in conjunction with the above apparatus.

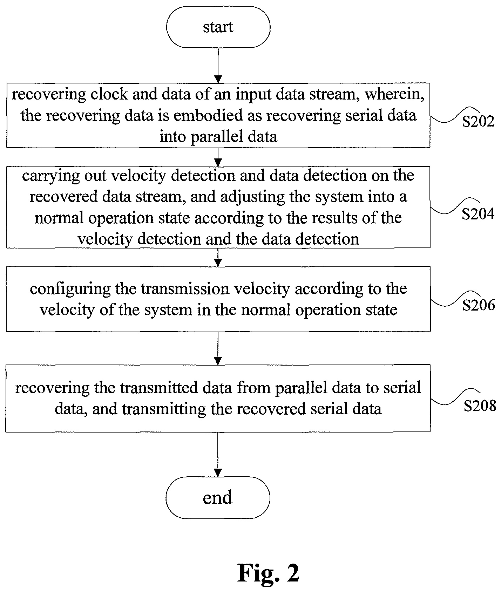

In the present embodiment, the description of the process of implementing an optical interface with a plurality of velocities is performed respectively for the receiving side of the optical interface and the transmitting side of the optical interface. Figure 2 is a flow chart of the method for implementing an optical interface with a plurality of velocities according to an embodiment of the present invention. As shown in Figure 2, the method comprises the processing at the receiving side of the optical interface and the processing at the transmitting side of the optical interface, which are described respectively as follows.
(1) The processing at the receiving side of the optical interface comprises the following step S202 to step S204:
   step S202, recovering clock and data of an input data stream, specifically, recovering serial data into parallel data; and
   step S204, carrying out velocity detection and data detection on the recovered data stream, and adjusting the system into a normal operation state according to the results of the velocity detection and the data detection.

In addition, before step S204, it is required to firstly set the operational velocity as the highest operational velocity.

Moreover, in step S204, the specific operations of carrying out velocity detection are: 1. detecting whether consecutive identical contents appear in the recovered data stream in predetermined time period; and 2. transmitting a warning of excessive operational velocity, reducing the operational velocity, continuing monitoring the operational velocity when it is detected that consecutive identical contents appear in the data stream in predetermined time period; and continuing reducing the operational velocity when consecutive identical contents still appear in a next predetermined time period, until no consecutive identical contents appear.

In step S204, the specific operations of carrying out data detection are: 1. detecting whether contents of the recovered data stream are normal in predetermined time period; and 2. configuring the operational velocity of the receiving side of the optical interface with the highest operational velocity when it is detected that contents of the recovered data stream are abnormal, and restarting the velocity configuration, velocity detection and data detection.
(2) The processing at the transmitting side of the optical interface comprises the following step S206 to step S208:
   step S206, configuring the transmission velocity according to the velocity of the system in the normal operation state; and
   step S208, recovering the transmitted data from parallel data to serial data, and transmitting the recovered serial data.

In addition, after configuring the transmission velocity, it is further required to adjust the transmitted data, the operations of which specifically are: adjusting effective data contents on an input data bus to the corresponding position of a transmission data bus according to the operational velocity configured at the receiving side of the optical interface, and converting parallel data into serial data.

By means of the technical solution, an optical interface which can automatically adapt to a velocity can be realized.

According to an embodiment of the present invention, a computer readable medium is provided. Computer executable instructions are stored in the computer readable medium. When the instructions are executed by a computer or a processor, the computer or the processor is made to execute the processing of step S202 to step S208 as shown in Figure 2.

The above method and apparatus for implementing an optical interface with a plurality of velocities will be described in detail in conjunction with Figure 1 as follows.

In the receiving direction (the above receiving side of the optical interface), after serial data rx enters a receiving portion (the receiving module 2) of the serdes, the receiving portion of the serdes obtains clock rx_clock by recovering from the serial data rx according to the configuration of the state controlling module, simultaneously changes high-speed serial data into low-speed parallel data deser_data, and transmits the deser_data to the velocity detection module 4 and the data detection module 6.

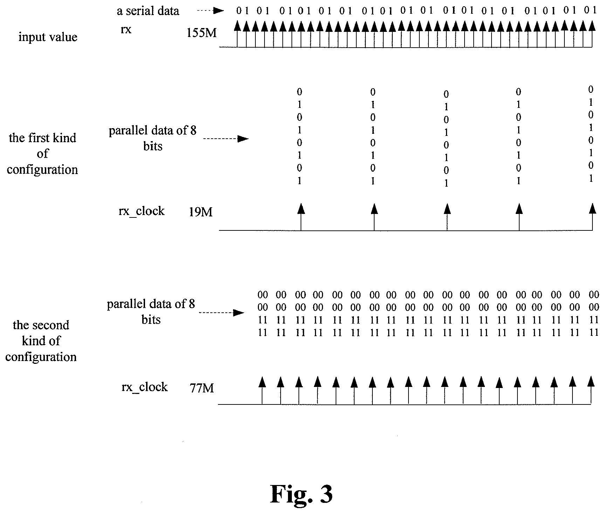

The velocity detection module 4 detects the recovered parallel data bus. As shown in Figure 3, it is in the figure that the defaulted serial/parallel conversion rate of the serdes is 1:8, that is, converting the serial data into parallel data with a width of 8 bits. When the speed level of the serial data received by the serdes is STM-1, a serial data is 010101010101010101010101010101010101, and the velocity is 155M, if the serdes is configured as a service of STM-1, configuration parameters and the velocity of input frames are completely the same, such that the clock obtained from the recovering by the serdes is 19M (8 dividing frequency of 155M), and the recovered data contents and the input data contents are completely the same with the mere difference lying in data format. Specifically, what is input is serial data, and what is recovered is parallel data, viz. the result of the first kind of configuration in Figure 3.

However, if the input data is still STM-1, and the configuration parameter of the serdes is STM-4, as the velocity of the configuration parameter is the quadruple of the velocity of the input data, the recovered clock frequency turns to be 77M, and consecutive 4 bits in the recovered data are completely the same, as shown in the result of the second kind of configuration in Figure 3, wherein the result of the second kind of configuration is caused by that the configuration parameter is inconsistent with and larger than actual data velocity. The function of the velocity detection module 4 is to detect whether consecutive identical contents appear in the recovered data. If consecutive identical contents appear in the data bus for a sufficient time of period, it indicates that the configuration parameter of the serdes is larger than the input data velocity, and in this case, the velocity detection module 4 gives an indication of overspeed, and transmits the signal to the state controlling module 8.

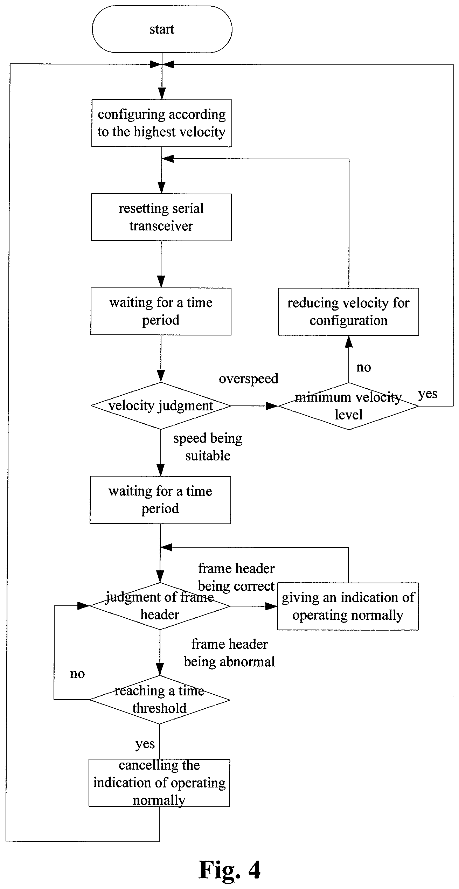

The processing procedure of the state controlling module is described in detail as follows. As shown in Figure 4, immediately after the system is powered on, the state controlling module 8 prepares starting operation, and configures the serdes in accordance with the highest operational velocity of the serdes. After the configuration is finished, the serders is reset, such that the serdes operates in the manner of the highest recovery velocity, and obtains the data and the clock by recovering. After the serdes operates stably, the velocity detection module 4 detects whether the configured velocity is too high, wherein in the case that the configured velocity is too high, the velocity is reduced by one level, and the serdes is reconfigured, such that the operational velocity of the serdes is reduced, and the velocity detection module 4 re-detects the velocity of recovered data, and if the velocity is still too high, it continues to reduce the velocity of the configuration parameter, until the velocity of the configuration parameter is identical to the velocity of the input data. However, if the velocity of the configuration parameter has already been the minimum value, but the velocity detection module 4 still gives an indication of overspeed, it indicates that the system operates abnormally, and it is necessary to make reconfiguration starting from the maximum velocity.

When the configured velocity of the serdes is identical to the input velocity, the velocity detection module 4 no longer reports an indication of overspeed, which indicates that the configuration for velocity parameter is correct, the velocity detection process ends, and the state controlling module 8 starts to detect whether the recovered data is normal.

Specifically, the data detection module 6 detects contents of the data stream, and judges whether the recovered data is normal. In the case that it is judged that error (e.g. frame loss or signal loss exists in the recovered SDH frame data, and the duration exceeds a certain threshold) exists in the recovered data, which shows that the recovered data contents are incorrect, the state controlling module 8 cancels the indication of normal operation of the system, and transmits a reset instruction, to make the system return to the initial state, and restart operation from the configuration of the maximum velocity.

After the data detection module 6 gives the indication indicating that the recovered data is normal, which indicates that there are no frame loss, signal loss and so on, that the whole system operates normally and can correctly recover the input data rx_fp and rx_data, and the state controlling module 8 sends an indication indicating that the system operates normally.

Then, the state controlling module 8 continuously detects whether the recovered data is abnormal. In normal operation state, when there exists abnormality in the recovered data and the duration for abnormality exceeds a threshold, it indicates that an interrupt occurs in service data. The state controlling module 8 cancels the indication indicating that the system operates normally, re-configures parameters starting from the initial state, and operates again in accordance with the flow.

In the transmitting direction (the above transmitting side of the optical interface), the data bus enters the data adjusting module 12. When the velocity capacity configured by the serdes which used for transmitting data is the highest velocity, the data adjusting module adjusts the input data contents according to the requirements of the serdes interface standard, and then, transmits the contents to the transmission portion (the above transmitting module 10) of the serdes, and the transmission portion of the serdes changes the parallel data into high-speed serial data and transmits the serial data. When the serdes operational velocity configured is lower than the highest velocity, only part of the contents in the input data needs the parallel/serial conversion performed by the transmission portion of the serdes, and it transmits the converted serial data. In this case, the data adjusting module 12 adjusts the input data contents, to adjust the contents, which need to be transmitted, to the corresponding bus of the transmission portion of the serdes (the contents which do not need to be transmitted are neglected), so as to guarantee that the serdes performs parallel/serial conversion on the contents which need to be transmitted and transmits the contents.

When the serdes transmits data tx_clock and tx_data, the corresponding contents, selected from the input bus ser_data according to the velocity configured, experience parallel/serial conversion and are transmitted.. Therefore, when data on the tx_data bus is at different transmission velocities and the distribution situation of the data is completely consistent with the selection of the serdes, the data adjusting module 12 can be omitted, in which input data bus tx_data are directly transmitted to the interface of the serdes. Such that when the serdes is configured with different velocities, the selected data and the expected contents are completely the same, and after the parallel/serial conversion, the obtained tx is transmitted.

By means of the technical solutions of the present invention, through the optical interface which automatically adapts to a plurality of velocities, the kinds of single boards of devices can be reduced, which has obvious economic benefit.

It shall be explained that the steps shown in the flow chart in the drawings can be executed in, for example, a computer system with a group of computer executable instructions. Moreover, although the logical order is shown in the flow chart, in some cases, the steps shown or described can be carried out in a different order.

The descriptions above are only preferable embodiments of the present invention, which are not used to restrict the present invention. For those skilled in the art, the present invention may have various changes and variations. Any modifications, equivalent substitutions, improvements etc. within the spirit and principle of the present invention shall be included in the scope of protection of the present invention.

## Claims

1. A method for implementing an optical interface with a plurality of velocities, comprising at a receiving side of the optical interface:
recovering clock and data of an input data stream, wherein the recovering data is embodied as recovering serial data into parallel data (S202); and
carrying out velocity detection and data detection on a recovered data stream, and adjusting the system into a normal operation state according to the results of the velocity detection and the data detection (S204), and
comprising at a transmitting side of the optical interface:
configuring transmission velocity according to the velocity of the system in the normal operation state (S206); and
recovering the transmitted data from parallel data to serial data, and transmitting the recovered serial data (S208);
**characterized by** the step of carrying out velocity detection on the recovered data stream embodied as:
detecting whether consecutive identical contents appear in the recovered data stream in predetermined time period; and
in the case that it is detected that consecutive identical contents appear in the data stream in predetermined time period, transmitting a warning of excessive operational velocity, reducing the operational velocity, continuing monitoring the operational velocity, wherein if consecutive identical contents still appear in a next predetermined time period, it continues reducing the operational velocity until no consecutive identical contents appear.

2. The method according to Claim 1, **characterized in that** before carrying out velocity detection and data detection on the recovered data stream, the method further comprises:
setting an operational velocity as the highest operational velocity.

3. The method according to Claim 2, **characterized in that** the step of carrying out data detection on the recovered data stream is embodied as:
detecting whether contents of the recovered data stream are normal in predetermined time period; and
in the case that it is detected that contents of the recovered data stream are abnormal, configuring the operational velocity of the receiving side of the optical interface with the highest operational velocity, and restarting velocity configuration, velocity detection and data detection.

4. The method according to Claim 1, **characterized in that**, after configuring transmission velocity, the method further comprises:
adjusting the transmitted data, which particularly comprises:
adjusting effective data contents on an input data bus to the corresponding position of a transmission data bus according to the operational velocity configured at the receiving side of the optical interface, and converting parallel data into serial data.

5. An apparatus for implementing an optical interface with a plurality of velocities, the apparatus comprising modules at a receiving side of the optical interface and modules at a transmitting side of the optical interface, comprising at the receiving side of the optical interface:
a receiving module, adapted to receive an input data stream, and recover clock and data of the input data stream, wherein recovering data is embodied as recovering serial data into parallel data;
a velocity detection module, adapted to carry out velocity detection on a recovered data stream, so as to detect whether the operational velocity is suitable;
a data detection module, adapted to carry out data detection on the recovered data stream so as to detect whether data frames are correct; and
a state controlling module, adapted to configure the operational velocities of the receiving module and a transmitting module according to the results of the velocity detection and the data detection, and adjust the system into a normal operation state, and
comprising at the transmitting side of the optical interface:
the transmitting module, adapted to recover transmitted data from parallel data to serial data, and transmit the recovered serial data;
**characterized by**:
the velocity detection module is further adapted to detect whether consecutive identical contents appear in the recovered data stream in predetermined time period; and in the case that it is detected that consecutive identical contents appear in the data stream in predetermined time period, it transmits a warning of excessive operational velocity; and
the state controlling module is further adapted to reduce the operational velocity in response to the warning of excessive operational velocity, and continuously monitor the operational velocity wherein in the case that consecutive identical contents still appear in a next predetermined time period, it continues reducing the operational velocity until no consecutive identical contents appear.

6. The apparatus according to Claim 5, **characterized in that** the apparatus further comprises:
a data adjusting module, adapted to adjust transmitted data,
wherein the state controlling module is further adapted to configure an adjusting method of the data adjusting module according to the operational velocity configured.

7. The apparatus according to Claim 5, **characterized in that**
the data detection module is further adapted to detect whether contents of the recovered data stream are normal in predetermined time period; and
the state controlling module is further adapted to, in the case that it is detected that contents of the recovered data stream are abnormal, configure the operational velocity of the receiving side of the optical interface with the highest operational velocity, and restart velocity configuration, velocity detection and data detection.

## Patentansprüche

1. Verfahren zum Implementieren einer optischen Schnittstelle mit einer Vielzahl von Geschwindigkeiten,
umfassend, auf einer Empfangsseite der optischen Schnittstelle:
Wiederherstellen von Takt und Daten eines Eingangsdatenstroms, wobei das Wiederherstellen von Daten als Wiederherstellen von seriellen Daten in parallele Daten ausgestaltet ist (S202); und
Durchführen von Geschwindigkeitserfassung und Datenerfassung an einem wiederhergestellten Datenstrom, und Anpassen des Systems in einem Normalbetriebszustand gemäß den Ergebnissen der Geschwindigkeitserfassung und der Datenerfassung (S204), und
Umfassend, auf einer Übertragungsseite der optischen Schnittstelle:
Konfigurieren von Übertragungsgeschwindigkeit gemäß der Geschwindigkeit des Systems im Normalbetriebszustand (S206); und
Wiederherstellen der übertragenen Daten aus parallelen Daten in serielle Daten, und Übertragen der wiederhergestellten seriellen Daten (S208);
**dadurch gekennzeichnet, dass**
der Schritt des Durchführens von Geschwindigkeitserfassung am wiederhergestellten Datenstrom ausgestaltet ist als:
Erfassen, ob in einem vorbestimmten Zeitraum aufeinanderfolgende identische Inhalte im wiederhergestellten Datenstrom auftreten; und
in dem Fall, dass erfasst wird, dass in einem vorbestimmten Zeitraum aufeinanderfolgende identische Inhalte im Datenstrom auftreten, Übertragen einer Warnung bezüglich zu hoher Betriebsgeschwindigkeit, Reduzieren der Betriebsgeschwindigkeit, Fortsetzen des Überwachens der Betriebsgeschwindigkeit, wobei wenn in einem nächsten vorbestimmten Zeitraum immer noch aufeinanderfolgende identische Inhalte auftreten, es das Reduzieren der Betriebsgeschwindigkeit fortsetzt, bis keine aufeinanderfolgenden identischen Inhalte mehr auftreten.

2. Verfahren nach Anspruch 1, **dadurch gekennzeichnet, dass** vor dem Durchführen von Geschwindigkeitserfassung und Datenerfassung am wiederhergestellten Datenstrom das Verfahren weiter umfasst:
Einstellen einer Betriebsgeschwindigkeit als die höchste Betriebsgeschwindigkeit.

3. Verfahren nach Anspruch 2, **dadurch gekennzeichnet, dass** der Schritt des Durchführens von Datenerfassung am wiederhergestellten Datenstrom ausgestaltet ist als:
Erfassen, ob Inhalte des wiederhergestellten Datenstroms in einem vorbestimmten Zeitraum normal sind; und
in dem Fall, dass erfasst wird, dass Inhalte des wiederhergestellten Datenstroms abnormal sind, Konfigurieren der Betriebsgeschwindigkeit der Empfangsseite der optischen Schnittstelle mit der höchsten Betriebsgeschwindigkeit, und Neustarten von Geschwindigkeitskonfiguration, Geschwindigkeitserfassung und Datenerfassung.

4. Verfahren nach Anspruch 1, **dadurch gekennzeichnet, dass** nach dem Konfigurieren der Übertragungsgeschwindigkeit das Verfahren weiter umfasst:
Anpassen der übertragenen Daten, was insbesondere umfasst:
Anpassen von effektiven Dateninhalten an einem Eingangsdatenbus auf die entsprechende Position eines Übertragungsdatenbusses gemäß der Betriebsgeschwindigkeit, die auf der Empfangsseite der optischen Schnittstelle konfiguriert ist, und Umwandeln von parallelen Daten in serielle Daten.

5. Vorrichtung zum Implementieren einer optischen Schnittstelle mit einer Vielzahl von Geschwindigkeiten, wobei die Vorrichtung Module auf einer Empfangsseite der optischen Schnittstelle, und Module auf einer Übertragungsseite der optischen Schnittstelle umfasst,
umfassend, auf einer Empfangsseite der optischen Schnittstelle:
ein Empfangsmodul, das dazu ausgebildet ist, einen Eingangsdatenstrom zu empfangen und Takt und Daten des Eingangsdatenstroms wiederherzustellen, wobei das Wiederherstellen von Daten als Wiederherstellen von seriellen Daten in parallele Daten ausgestaltet ist;
ein Geschwindigkeitserfassungsmodul, das dazu ausgebildet ist, Geschwindigkeitserfassung an einem wiederhergestellten Datenstrom durchzuführen, um zu erfassen, ob die Betriebsgeschwindigkeit passend ist;
ein Datenerfassungsmodul, das dazu ausgebildet ist, Datenerfassung am wiederhergestellten Datenstrom durchzuführen, um zu erfassen, ob Datenrahmen korrekt sind; und
ein Zustandssteuermodul, das dazu ausgebildet ist, die Betriebsgeschwindigkeiten des Empfangsmoduls und eines Übertragungsmoduls gemäß den Ergebnissen der Geschwindigkeitserfassung und der Datenerfassung zu konfigurieren, und das System in einem Normalbetriebszustand anzupassen, und
umfassend, auf der Übertragungsseite der optischen Schnittstelle:
das Übertragungsmodul, das dazu ausgebildet ist, übertragene Daten aus parallelen Daten in serielle Daten wiederherzustellen und die wiederhergestellten seriellen Daten zu übertragen;
**dadurch gekennzeichnet, dass**:
das Geschwindigkeitserfassungsmodul weiter dazu ausgebildet ist, zu erfassen, ob in einem vorbestimmten Zeitraum aufeinanderfolgende identische Inhalte im wiederhergestellten Datenstrom auftreten; und es in dem Fall, dass erfasst wird, dass in einem vorbestimmten Zeitraum aufeinanderfolgende identische Inhalte im Datenstrom auftreten, eine Warnung bezüglich zu hoher Betriebsgeschwindigkeit übertragt; und
das Zustandssteuermodul weiter dazu ausgebildet ist, in Reaktion auf die Warnung bezüglich zu hoher Betriebsgeschwindigkeit die Betriebsgeschwindigkeit zu reduzieren und die Betriebsgeschwindigkeit fortgesetzt zu überwachen, wobei es in dem Fall, dass in einem nächsten vorbestimmten Zeitraum immer noch aufeinanderfolgende identische Inhalte auftreten, das Reduzieren der Betriebsgeschwindigkeit fortsetzt, bis keine aufeinanderfolgenden identischen Inhalte mehr auftreten.

6. Vorrichtung nach Anspruch 5, **dadurch gekennzeichnet, dass** die Vorrichtung weiter umfasst:
ein Datenanpassmodul, das dazu ausgebildet ist, übertragene Daten anzupassen,
wobei das Zustandssteuermodul weiter dazu ausgebildet ist, ein Anpassverfahren des Datenanpassmoduls gemäß der konfigurierten Betriebsgeschwindigkeit zu konfigurieren.

7. Vorrichtung nach Anspruch 5, **dadurch gekennzeichnet, dass**
das Datenerfassungsmodul weiter dazu ausgebildet ist, zu erfassen, ob Inhalte des wiederhergestellten Datenstroms in einem vorbestimmten Zeitraum normal sind; und
das Zustandssteuermodul weiter dazu ausgebildet ist, in dem Fall, dass erfasst wird, dass Inhalte des wiederhergestellten Datenstroms abnormal sind, die Betriebsgeschwindigkeit der Empfangsseite der optischen Schnittstelle mit der höchsten Betriebsgeschwindigkeit zu konfigurieren, und Geschwindigkeitskonfiguration, Geschwindigkeitserfassung und Datenerfassung neu zu starten.

## Revendications

1. Procédé de mise en oeuvre d'une interface optique avec une pluralité de vitesses,
comprenant au niveau d'un côté réception de l'interface optique :
la restauration d'une horloge et de données d'un flux de données d'entrée, dans lequel la restauration de données est réalisée comme une restauration de données série en données parallèles (S202) ; et
l'exécution d'une détection de vitesse et d'une détection de données sur un flux de données restauré, et le réglage du système dans un état de fonctionnement normal en fonction des résultats de la détection de vitesse et de la détection de données (S204), et
comprenant au niveau d'un côté transmission de l'interface optique :
la configuration d'une vitesse de transmission en fonction de la vitesse du système dans l'état de fonctionnement normal (S206) ; et
la restauration des données transmises de données parallèles en données série, et la transmission des données série restaurées (S208) ;
**caractérisé par**
l'étape d'exécution de la détection de vitesse sur le flux de données restauré réalisée comme :
le fait de détecter si des contenus identiques consécutifs apparaissent dans le flux de données restauré dans une période de temps prédéterminée ; et
dans le cas où il est détecté que des contenus identiques consécutifs apparaissent dans le flux de données dans une période de temps prédéterminée, la transmission d'un avertissement de vitesse de fonctionnement excessive, la réduction de la vitesse de fonctionnement, la poursuite de la surveillance de la vitesse de fonctionnement, dans lequel, si des contenus identiques consécutifs apparaissent encore dans une période de temps prédéterminée suivante, la poursuite de la réduction de la vitesse de fonctionnement jusqu'à ce que des contenus identiques consécutifs n'apparaissent plus.

2. Procédé selon la revendication 1, **caractérisé en ce que**, avant l'exécution de la détection de vitesse et de la détection de données sur le flux de données restauré, le procédé comprend en outre :
le réglage d'une vitesse de fonctionnement comme la vitesse de fonctionnement la plus élevée.

3. Procédé selon la revendication 2, **caractérisé en ce que** l'étape d'exécution de la détection de données sur le flux de données restauré est réalisée comme :
le fait de détecter si des contenus du flux de données restauré sont normaux dans une période de temps prédéterminée ; et
dans le cas où il est détecté que des contenus du flux de données restauré sont anormaux, la configuration de la vitesse de fonctionnement du côté réception de l'interface optique avec la vitesse de fonctionnement la plus élevée, et le redémarrage d'une configuration de vitesse, d'une détection de vitesse et d'une détection de données.

4. Procédé selon la revendication 1, **caractérisé en ce que**, après la configuration de la vitesse de transmission, le procédé comprend en outre :
le réglage des données transmises, qui comprend en particulier :
le réglage de contenus de données effectifs sur un bus de données d'entrée à la position correspondante d'un bus de données de transmission en fonction de la vitesse de fonctionnement configurée au niveau d'un côté réception de l'interface optique, et la conversion de données parallèles en données série.

5. Appareil pour la mise en oeuvre d'une interface optique avec une pluralité de vitesses, l'appareil comprenant des modules au niveau d'un côté réception de l'interface optique et des modules au niveau d'un côté transmission de l'interface optique,
comprenant au niveau du côté réception de l'interface optique :
un module de réception adapté pour recevoir un flux de données d'entrée et restaurer une horloge et des données du flux de données d'entrée, dans lequel la restauration de données est réalisée comme une restauration de données série en données parallèles ;
un module de détection de vitesse adapté pour exécuter une détection de vitesse sur un flux de données restauré, de manière à détecter si la vitesse de fonctionnement est appropriée ;
un module de détection de données adapté pour exécuter une détection de données sur le flux de données restauré, de manière à détecter si des trames de données sont correctes ; et
un module de commande d'état adapté pour configurer les vitesses de fonctionnement du module de réception et d'un module de transmission en fonction des résultats de la détection de vitesse et de la détection de données, et régler le système dans un état de fonctionnement normal, et
comprenant au niveau du côté transmission de l'interface optique :
le module de transmission adapté pour restaurer des données transmises de données parallèles en données série, et transmettre les données série restaurées ;
**caractérisé en ce que** :
le module de détection de vitesse est adapté en outre pour détecter si des contenus identiques consécutifs apparaissent dans le flux de données restauré dans une période de temps prédéterminée ; et dans le cas où il est détecté que des contenus identiques consécutifs apparaissent dans le flux de données dans une période de temps prédéterminée, il transmet un avertissement de vitesse de fonctionnement excessive ; et
le module de commande d'état est adapté en outre pour réduire la vitesse de fonctionnement en réponse à l'avertissement de vitesse de fonctionnement excessive, et surveiller de manière continue la vitesse de fonctionnement, dans lequel, dans le cas où des contenus identiques consécutifs apparaissent encore dans une période de temps prédéterminée suivante, il continue de réduire la vitesse de fonctionnement jusqu'à ce que des contenus identiques consécutifs n'apparaissent plus.

6. Appareil selon la revendication 5, **caractérisé en ce que** l'appareil comprend en outre :
un module de réglage de données adapté pour régler des données transmises,
dans lequel le module de commande d'état est adapté en outre pour configurer un procédé de réglage du module de réglage de données en fonction de la vitesse de fonctionnement configurée.

7. Appareil selon la revendication 5, **caractérisé en ce que**
le module de détection de données est adapté en outre pour détecter si des contenus du flux de données restauré sont normaux dans une période de temps prédéterminée ; et
le module de commande d'état est adapté en outre pour, dans le cas où il est détecté que des contenus du flux de données restauré sont anormaux, configurer la vitesse de fonctionnement du côté réception de l'interface optique avec la vitesse de fonctionnement la plus élevée, et redémarrer une configuration de vitesse, une détection de vitesse et une détection de données.
